# EUROPÄISCHE PATENTSCHRIFT

(11) **EP 3 616 381 B1**
(45) Veröffentlichungstag und Bekanntmachung des Hinweises auf die Patenterteilung: **04.06.2025**
(21) Anmeldenummer: 18733797.7
(22) Anmeldetag: 06.06.2018
(51) Int. Cl.: H04W 12/12, H04W 4/42, H04L 9/40, H04L 67/12, H04L 67/125, H04L 67/561

(54) **VERFAHREN UND VORRICHTUNG ZUM ÜBERMITTELN EINER NACHRICHT IN EINER SICHERHEITSRELEVANTEN ANLAGE**
METHOD AND DEVICE FOR TRANSMITTING A MESSAGE IN A SAFETY-RELEVANT FACILITY
PROCÉDÉS ET DISPOSITIF DESTINÉS À TRANSMETTRE DES INFORMATIONS DANS UN SYSTÈME CONCERNANT LA SÉCURITÉ

(30) Priorität: 22.06.2017 DE 102017210513
(43) Veröffentlichungstag der Anmeldung: 04.03.2020
(73) Patentinhaber: Siemens Mobility GmbH, 81739 München (DE)
(72) Erfinder: BRABAND, Jens, 38106 Braunschweig (DE)
(74) Vertreter: Siemens Patent Attorneys
(86) Internationale Anmeldenummer: PCT/EP2018/064889
(87) Internationale Veröffentlichungsnummer: WO 2018/234039

(56) Entgegenhaltungen:
- US-A1- 2006 075 084
- US-A1- 2008 134 329
- US-A1- 2014 365 775

## Beschreibung

Die Erfindung betrifft ein Verfahren zum Übermitteln einer Nachricht in einer sicherheitsrelevanten Anlage von wenigstens einem Absender zu wenigstens einem Empfänger über ein Netzwerk mit wenigstens einem Knotenpunkt, an dem die Nachricht empfangen und in Richtung des Empfängers weitergeleitet wird.

Innerhalb von Datennetzwerken, wie beispielsweise dem Internet, werden ständig Nachrichten von Absendern zu Empfängern übermittelt. Die Übermittlung erfolgt über Knotenpunkte, die den jeweiligen Empfänger jeder Nachricht ermitteln und die Nachricht entsprechend in Richtung des Empfängers weiterleiten. Bei Überlastung eines Empfängers durch zu viele eintreffende Nachrichten kann es zu einer sogenannten Verweigerung des Dienstes beim Empfänger kommen, die als Denial of Service (DoS) bezeichnet wird. Hierbei ist beispielsweise die Anzahl der Nachrichten für einen Empfänger so groß, dass sie vom Empfänger nicht alle bearbeitet werden können und dieser dadurch seinen Dienst einstellt. Dies kann auch für gezielte Angriffe auf einen Empfänger genutzt werden und kann daher zu erheblichen Problemen führen.

Aus der US 2014/365775 A1 sind ein System und eine Anlage bekannt, die einen DoS-Angriff verhindern sollen. Aus der US 2006/075084 A1 ist ein Verfahren bekannt, das eine Überlastung bei einem Voice over Internet Protokoll feststellen soll.

Insbesondere in Anlagen mit sicherheitsrelevanten Funktionen, wie beispielsweise eisenbahntechnische oder militärische Anlagen oder Atomkraftwerke, stellt dies ein ernstzunehmendes Problem dar, das adressiert werden muss. Um dieses Problem auszuschließen, wurden in der Vergangenheit ausschließlich geschlossene Netze verwendet, zu denen nur bekannte Teilnehmer Zugang haben. Bei der in jüngster Zeit häufiger gewünschten Verwendung von offenen Netzen kann jeder, der einen Zugriff zum Netzwerk hat, Nachrichten einspeisen und das Netz oder bestimmte Empfänger blockieren. Daher wird beispielswei-se in der Norm IEC62443 verlangt, dass Maßnahmen zum Schutz der Verfügbarkeit ergriffen werden.

Der Erfindung liegt somit die Aufgabe zugrunde, ein Verfahren der eingangs genannten Art bereitzustellen, das besseren Schutz vor Denial of Service-DoS-Angriffen bietet.

Erfindungsgemäß wird die Aufgabe von dem eingangs genannten Verfahren dadurch gelöst, dass wenigstens ein von der Nachricht abhängiger Prüfwert ermittelt wird und die Nachricht von dem wenigstens einen Knotenpunkt in Abhängigkeit von dem ermittelten Prüfwert weitergeleitet oder nicht weitergeleitet wird.

In Abhängigkeit von dem ermittelten Prüfwert wird die Weiterleitung der Nachrichtung in Richtung des Empfängers entweder blockiert oder ausgeführt. Entspricht der ermittelte Prüfwert für eine Nachricht nicht den gesetzten Anforderungen, wie dies bei Nachrichten zu erwarten ist, die den Empfänger schädigen und lahmlegen sollen, wird diese Nachricht blockiert, gelangt nicht zum Empfänger und kann dadurch keinen Schaden beim Empfänger verursachen. So kann ein Denial of Service (DoS) beim Empfänger verhindert werden. Zwar kann auch eine Nachricht mit schadhafter Absicht die Anforderungen an den Prüfwert erfüllen. Jedoch muss der Angreifer hierfür einen gewissen Aufwand betreiben, der üblicherweise nicht zu erwarten ist. Der Angriff wird zu aufwendig, so dass der Angreifer das Interesse verliert.

Bei dem erfindungsgemäßen Verfahren wird der Schutz vor Angriffen dadurch erreicht, dass der Aufwand und damit die Kosten für einen Angriff so hoch getrieben wird, dass ein Angriff für einen potentiellen Angreifer uninteressant wird. Das erfindungsgemäße Verfahren kann bereits bei der Spezifikation eines Netzwerkprotokolls integriert werden. Alternativ kann das erfindungsgemäße Verfahren selbstverständlich auch auf ein bestehendes Netzwerkprotokoll aufgesetzt werden.

Die Erfindung kann durch vorteilhafte Ausgestaltungen weiterentwickelt werden, die im Folgenden beschrieben sind.

Erfindungsgemäß werden Prüfwerte von vom Knotenpunkt weitergeleiteten Nachrichten zumindest zeitweise gespeichert und die Nachricht nicht weitergeleitet, wenn der Prüfwert der Nachricht mit einem der gespeicherten Prüfwerte übereinstimmt. Dies hat den Vorteil, dass Dubletten einfach erkannt werden und blockiert werden. Beispielsweise kann jeder Knotenpunkt eine projektierbare Anzahl der Prüfwerte der letzten Nachrichten in einer Liste abspeichern. Die Prüfwerte von neuen Nachrichten werden vor dem Weiterleiten mit den bekannten Prüfwerten in der Liste verglichen und bei Übereinstimmung verworfen.

Um den nötigen Aufwand für einen Angreifer noch weiter zu erhöhen, wird ein den Prüfwert beeinflussender Einstellwert erfindungsgemäß so bestimmt, dass der Prüfwert eine vorgegebene Bedingung erfüllt und der Einstellwert mit der Nachricht übermittelt werden, wobei die Nachricht von dem Knotenpunkt nur weitergeleitet wird, wenn der Prüfwert die vorbestimmte Bedingung erfüllt. Beispielsweise wird der Einstellwert in einem Datenpaket zusammen mit der Nachricht übermittelt. Der Einstellwert wird beispielsweise vom Absender vor dem Versenden der Nachricht ermittelt und in dem Datenpaket mit der Nachricht versendet. Der Prüfwert wird bei dieser Ausgestaltung aus der Nachricht und dem Einstellwert gebildet und muss die bestimmte Bedingung erfüllen. Die Bedingung kann beispielsweise sein, dass der Prüfwert größer, kleiner oder gleich einem vorbestimmten Schwellwert ist. Der Schwellwert kann beispielsweise von zentraler Stelle vorgegeben werden. Die Bedingung ist somit eine Art kryptografisches Puzzle, das durch die Auswahl des Einstellwerts zu lösen ist. Der Absender muss also vor dem Senden einen gewissen Aufwand betreiben, um den Einstellwert zu bestimmen und damit das kryptografische Puzzle zu lösen. Zwar müssen alle Absender, also auch die gutartigen, diesen Aufwand betreiben, aber die bösartigen Absender werden hierdurch sehr effektiv abgewehrt, weil diese den Aufwand scheuen werden. Um dynamisch auf Bedrohungen reagieren zu können, kann die vorbestimmte Bedingung, insbesondere in Abhängigkeit von einer Auslastung des Netzwerks, verändert werden. So kann die Bedingung skaliert werden, je nachdem, ob beispielsweise ein DoS-Angriff detektiert oder vermutet wird. Der nötige Aufwand eines potentiellen Angreifers, aber auch der legitimen Absender, wird verändert.

In einer weiteren vorteilhaften Ausgestaltung kann der Prüfwert unter Berücksichtigung von einem vorgegebenen und nicht mit der Nachricht übermittelten Vorgabewert ermittelt werden. Dies hat den Vorteil, dass der Vorgabewert unabhängig von der Nachricht ist und beispielsweise zentral an die Teilnehmer des Netzwerks verteilt und zyklisch aktualisiert wird. Nur mit dem aktuellen und richtigen Vorgabewert erreichen Nachrichten den richtigen Prüfwert und werden übermittelt. Nachrichten, die einen veralteten Vorgabewert verwendet haben, fallen heraus und werden blockiert.

Um einfache und etablierte Funktionen zu verwenden, kann der Prüfwert mittels einer Hash-Funktion oder Prüfsummenbildung ermittelt werden. Um beispielsweise zwei mittels Hash-Funktion erzeugte Hash-Werte miteinander zu vergleichen, wird aus den Hash-Werten jeweils in bekannter Weise eine natürliche Zahl abgeleitet. Die so ermittelten natürlichen Zahlen können dann verglichen werden.

Ferner kann das Verfahren in Abhängigkeit von einer Auslastung des Netzwerkes verändert werden. Dies hat den Vorteil, dass eine starke Belastung des Netzwerks einen DOS-Angriff vermuten lässt und dass so eine sofortige Erhöhung der Sicherheitsanforderung erreicht werden kann.

Um den Aufwand an den Knotenpunkten zu vereinfachen, kann der Prüfwert an die Nachricht angehängt und/oder mit der Nachricht weitergeleitet werden. Der Prüfwert kann beispielsweise im gleichen Datenpaket mit der Nachricht übermittelt werden. Die Erfindung betrifft weiterhin eine sicherheitsrelevante Anlage, insbesondere eine eisenbahntechnische Anlage, mit wenigstens einem Empfänger und wenigstens einem mit dem Empfänger zum Übermitteln von Nachrichten an den Empfänger verbundenen Netzwerk, wobei das Netzwerk wenigstens einen Knotenpunkt zum Empfangen und Weiterleiten von Nachrichten für den Empfänger aufweist. Um einen Schutz vor Denial of Service-Angriffen zu erhöhen, ist erfindungsgemäß vorgesehen, dass die Anlage zur Anwendung des Verfahrens nach einer der oben genannten Ausführungsformen ausgebildet ist.

Im Folgenden wird die Erfindung mit Bezug auf die beigefügten Figuren und den darin gezeigten beispielhaften Ausführungsformen erläutert.

Es zeigen:
- Figur 1: eine beispielhafte Ausführungsform einer erfindungsgemäßen sicherheitskritischen Anlage;
- Figur 2: eine schematische Darstellung einer beispielhaften Ausführungsform eines Datenpakets zur Verwendung in dem erfindungsgemäßen Verfahren;
- Figur 3: eine schematische Darstellung einer beispielhaften Ausführungsform des erfindungsgemäßen Verfahrens.

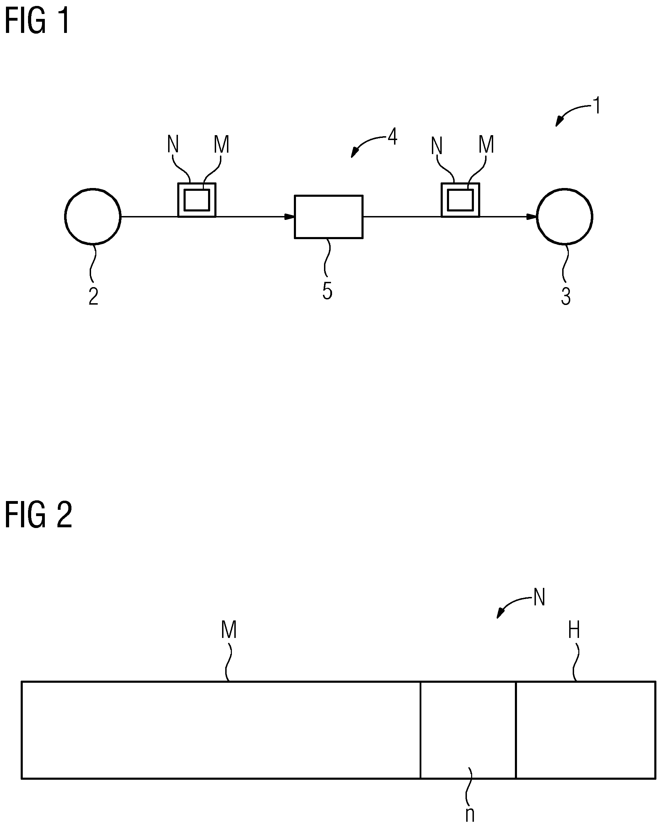

Figur 1 zeigt eine schematische Darstellung einer eisenbahntechnischen Anlage 1 mit einem Absender 2, einem Empfänger 3 und einem Netzwerk 4 zwischen dem Absender 2 und dem Empfänger 3. Das Netzwerk 4 weist einen Knotenpunkt 5 auf, der Nachrichten 6 empfängt und in Richtung des Empfängers 3 weiterleitet. Die Nachrichten 6 sind jeweils Teil von Datenpaketen 7, die innerhalb des Netzwerks 4 versendet werden.

Um die Empfänger 3 der eisenbahntechnischen Anlage 1 vor sogenannten Denial of Service (DoS)-Angriffen zu schützen, wird in dem Netzwerk 4 das erfindungsgemäße Verfahren angewendet. Dabei werden beim Übermitteln von Nachrichten M weitere Informationen in dem Datenpaket N versendet.

Wie in Figur 2 dargestellt, umfasst das Datenpaket N neben der Nachricht M einen Einstellwert n und einen Prüfwert H. Der Prüfwert H ist bei der beispielhaften Ausführungsform der Figuren ein mit Hilfe einer Hash-Funktion ermittelter Hash-Wert, der in Abhängigkeit von der Nachricht M und dem Einstellwert n ermittelt wird. Es gilt also H(M|n). Der Einstellwert n wird vom Absender 2 vor dem Versenden des Datenpakets 7 so festgelegt, dass der Prüfwert H eine vorbestimmte Bedingung erfüllt. Diese Bedingung ist beispielsweise, dass der Prüfwert H unterhalb eines vorgegebenen Schwellwerts x liegt H(M|n)<x. Alternativ kann die Bedingung selbstverständlich auch sein, dass der Prüfwert H oberhalb oder gleich dem Schwellwert x ist. Der Absender 2 löst ein kryptografisches Puzzle, um den Einstellwert n zu bestimmen.

Unter einem kryptografischen Puzzle P ist eine Aufgabe zu verstehen, die vom Prinzip her nur durch Probieren gelöst werden kann - analog zu einem echten Puzzle mit einem einfarbigen Motiv. Ein beispielhaftes kryptografisches Puzzle P ist es, einen Wert für den Einstellwert n zu finden, so dass für eine feste Nachricht M der Prüfwert H (M,n) kleiner als der vorgegebene Schwellwert x ist.

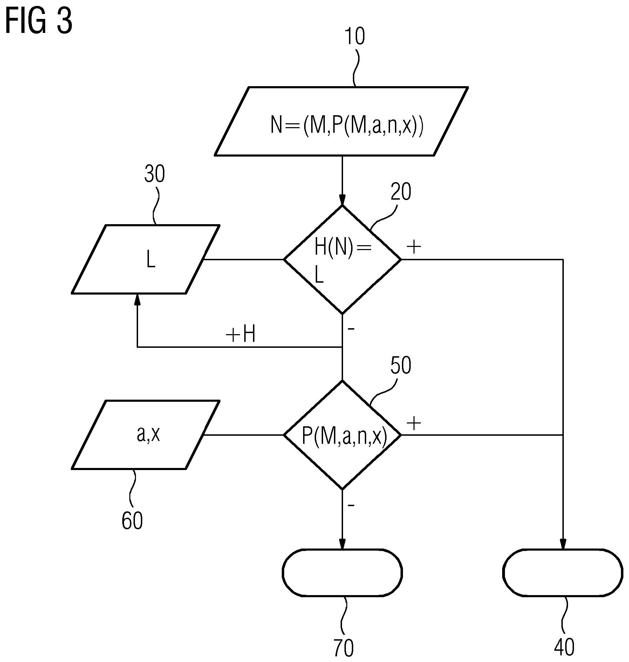

Im Folgenden wird eine beispielhafte Ausführung des erfindungsgemäßen Verfahrens mit Bezug auf das schematische Flussdiagramm in Figur 3 erläutert.

Im Schritt 10 empfängt der Knotenpunkt 5 zunächst das Datenpaket N, das die zu übermittelnde Nachricht M enthält. Das Datenpaket N umfasst die Nachricht M sowie ein krypotgrafisches Puzzle P, das von der Nachricht M, einem Prüfwert a, dem Einstellwert n und dem Schwellwert x abhängt.

Bei der ersten Prüfung im folgenden Verfahrensschritt 20 wird geprüft, ob der Prüfwert H vom Datenpaket N in einer Liste L vorkommt. In der Liste L werden die Prüfwerte H der letzten Datenpakete N abgespeichert. Bei der Ausführungsform in Figur 3 umfasst die Liste L beispielsweise eine Anzahl w von letzten Prüfwerte H. Dabei wird die Liste L ständig bei neuen übermitteln Datenpaketen N aktualisiert, also neue Prüfwerte H aufgenommen und die ältesten Prüfwerte H entfernt, beispielsweise wie bei einem Schieberegister. Wenn nun im Schritt 20 festgestellt wird, dass der Prüfwert H des aktuellen Datenpakets N in der Liste L vorkommt, handelt es sich um die Dublette eines alten Datenpakets und die Weiterleitung des aktuellen Datenpakets N wird verhindert. In Figur 3 ist die Liste L im Block 30 abgelegt, zu dem Schritt 20 Zugriff hat. Das Verwerfen des Datenpaktes M und das damit verbundene Blockieren ist in Verfahrensschritt 40 dargestellt. Wenn der Prüfwert H nicht in der Liste L vorkommt, wird die Liste L um den aktuellen Prüfwert H ergänzt und das Verfahren mit Schritt 50 fortgesetzt.

Im nächsten Schritt 50 des erfindungsgemäßen Verfahrens wird überprüft, ob ein vorbestimmtes kryptografisches Puzzle P gelöst ist. Das Puzzle P berücksichtigt die Nachricht M und den Einstellwert n, die beide im Datenpaket N vorhanden sind, und den vorgegebenen Prüfwert a und den Schwellwert x, die beide im Baustein 60 vorhanden sind. Führt diese Prüfung im Schritt 50 zur vorbestimmten korrekten Lösung, wird das Datenpaket N und damit die Nachricht M im Schritt 70 an den Empfänger 3 weitergeleitet. Führt der Schritt 50 nicht zur korrekten Lösung, wird das Datenpaket N und damit die Nachricht M nicht an den Empfänger 3 weitergeleitet und im Schritt 40 verworfen.

Das im Schritt 50 bei der Ausführungsform in Figur 3 verwendete kryptografische Puzzle P hat die Bedingung, dass der Prüfwert H von der Nachricht M, dem Einstellwert n und dem Prüfwert a kleiner ist als der Schwellwert **x.** Dabei können sowohl der Schwellwert x als auch der Prüfwert a von zentraler Stelle (nicht dargestellt) vorgegeben werden. Der Prüfwert a wird von zentraler Stelle zyklisch aktualisiert. Der Schwellwert x kann beispielsweise auch dezentral vorgegeben werden und beispielsweise in Abhängigkeit von einer Auslastung des Netzwerks 4 skaliert werden. Wenn eine hohe Auslastung des Netzwerks 4 vorliegt, könnte ein Denial of Service (DoS)-Angriff vorliegen und der Schwellwert x wird so verändert, dass der Aufwand bei der Erstellung des Datenpakets N erhöht wird. Dies ist zwar auch für gutartige Absender 2 mit mehr Aufwand verbunden, aber es wehrt auch bösartige Absender ab.

Das in Figur 3 dargestellte Verfahren ist nur eine mögliche Ausführungsform des Verfahrens. Andere Ausführungsformen sind möglich. Beispielsweise können die Schritte/Blöcke 20, 30 oder alternativ die Schritte/Blöcke 50, 60 weggelassen werden. Der Block 60 kann alternativ auch mehr oder weniger Parameter aufweisen.

## Patentansprüche

1. Verfahren zum Übermitteln einer Nachricht (M) in eine sicherheitsrelevante Anlage (1) von wenigstens einem Absender (2) zu wenigstens einem Empfänger (3) über ein Netzwerk (4) mit wenigstens einem Knotenpunkt (5), an dem die Nachricht (M) empfangen und in Richtung des Empfängers (3) weitergeleitet wird,
wobei wenigstens ein von der Nachricht (4) abhängiger Prüfwert (H) ermittelt wird und die Nachricht (M) von dem wenigstens einen Knotenpunkt (5) in Abhängigkeit von dem ermittelten Prüfwert (H) weitergeleitet oder nicht weitergeleitet wird,
**dadurch gekennzeichnet, dass**
Prüfwerte (H) von vom Knotenpunkt (5) weitergeleiteten Nachrichten (M) zumindest zeitweise gespeichert werden und die Nachricht (M) nicht weitergeleitet wird, wenn der Prüfwert der Nachricht (M) mit einem der gespeicherten Prüfwerte (H) übereinstimmt, und
ein den Prüfwert (H) beeinflussender Einstellwert (n) so bestimmt wird, dass der Prüfwert (H) eine vorgegebene Bedingung erfüllt, und der Einstellwert (n) mit der Nachricht (M) übermittelt wird, wobei die Nachricht (M) von dem Knotenpunkt (5) nur weitergeleitet wird, wenn der Prüfwert (H) die vorbestimmte Bedingung erfüllt.

2. Verfahren nach Anspruch 1,
**dadurch gekennzeichnet, dass** die Bedingung verwendet wird, dass der Prüfwert (H) größer oder kleiner oder gleich einem vorbestimmten Schwellwert (x) ist.

3. Verfahren nach Anspruch 2,
**dadurch gekennzeichnet, dass** der Schwellwert (x) von einer zentralen Stelle vorgegeben wird.

4. Verfahren nach Anspruch 1 oder 2,
**dadurch gekennzeichnet, dass** die vorbestimmte Bedingung, insbesondere in Abhängigkeit von einer Auslastung des Netzwerks (4), verändert wird.

5. Verfahren nach einem der oben genannten Ansprüche,
**dadurch gekennzeichnet, dass** der Prüfwert (H) unter Berücksichtigung von einem vorgegebenen und nicht mit der Nachricht (M) übermittelten Vorgabewert (a) ermittelt wird.

6. Verfahren nach einem der oben genannten Ansprüche,
**dadurch gekennzeichnet, dass** der Prüfwert (H) mittels einer Hash-Funktion oder Prüfsummenbildung ermittelt wird.

7. Verfahren nach einem der oben genannten Ansprüche,
**dadurch gekennzeichnet, dass** das Verfahren in Abhängigkeit von einer Auslastung des Netzwerkes (4) verändert wird.

8. Verfahren nach einem der oben genannten Ansprüche,
**dadurch gekennzeichnet, dass** der Prüfwert (H) an die Nachricht (M) angehängt und/oder mit der Nachricht (M) weitergeleitet wird.

9. Sicherheitsrelevante Anlage mit wenigstens einem Empfänger (3) und wenigstens einem mit dem Empfänger (3) zum Übermitteln von Nachrichten (M) an den Empfänger (3) verbundenen Netzwerk (4), wobei das Netzwerk (4) wenigstens einen Knotenpunkt (5) zum Empfangen und Weiterleiten von Nachrichten (M) für den Empfänger (3) aufweist,
**dadurch gekennzeichnet, dass** die Anlage zur Anwendung des Verfahrens nach einem der oben genannten Ansprüche ausgebildet ist.

10. Sicherheitsrelevante Anlage nach Anspruch 9,
**dadurch gekennzeichnet, dass** die Anlage als eine eisenbahntechnische Anlage (1) ausgebildet ist.

## Claims

1. Method for transmitting a message (M) in a safety-relevant installation (1) from at least one sender (2) to at least one receiver (3) via a network (4) with at least one node point (5), at which the message (M) is received and forwarded in the direction of the receiver (3),
wherein at least one test value (H) dependent upon the message (4) is ascertained and the message (M) is forwarded or not forwarded from the at least one node point (5) as a function of the ascertained test value (H),
**characterised in that**
test values (H) of messages (M) forwarded from the node point (5) are stored at least temporarily and the message (M) is not forwarded if the test value of the message (M) corresponds to one of the stored test values (H), and
a setting value (n) influencing the test value (H) is determined such that the test value (H) meets a predefined condition, and the setting value (n) is transmitted with the message (M), wherein the message (M) is only forwarded from the node point (5) if the test value (H) meets the predetermined condition.

2. Method according to claim 1,
**characterised in that**
the condition used is that the test value (H) is greater than or less than or equal to a predetermined threshold value (x).

3. Method according to claim 2,
**characterised in that**
the threshold value (x) is predefined by a central authority.

4. Method according to claim 1 or 2,
c**haracterised in** that
the predetermined condition is modified, in particular as a function of a utilisation of the network (4).

5. Method according to one of the aforementioned claims,
**characterised in that**
the test value (H) is ascertained while taking into consideration a predefined default value (a) that is not transmitted with the message (M).

6. Method according to one of the aforementioned claims,
**characterised in that**
the test value (H) is ascertained by means of a hash function or checksum formation.

7. Method according to one of the aforementioned claims,
**characterise**d **in** that
the method is modified as a function of a utilisation of the network (4).

8. Method according to one of the aforementioned claims,
**characterised in that**
the test value (H) is attached to the message (M) and/or is forwarded with the message (M).

9. Safety-relevant installation with at least one receiver (3) and at least one network (4) that is connected to the receiver (3) for the transmission of messages (M) to the receiver (3), wherein the network (4) has at least one node point (5) for receiving and forwarding messages (M) for the receiver (3), **characterised in that**
the installation is embodied to apply the method according to one of the aforementioned claims.

10. Safety-relevant installation according to claim 9, **characterised in that**
the installation is embodied as a railway engineering installation (1).

## Revendications

1. Procédé de transmission d'un message (M) dans une installation (1) relevant de la sécurité par au moins un émetteur (2) à au moins un récepteur (3) en passant par un réseau (4) ayant au moins un point (5) nodal, où on reçoit le message (M) et on l'achemine en direction du récepteur (3),
dans lequel on détermine au moins une valeur (H) de contrôle, qui dépend du message (4), et on achemine ou on n'achemine pas le message (M) par le au moins un point (5) nodal en fonction de la valeur (H) de contrôle déterminée,
**caractérisé en ce que**
l'on met en mémoire au moins de temps en temps des valeurs (H) de contrôle de messages (M) acheminés par le point (5) nodal et on n'achemine pas le message (M), si la valeur de contrôle du message (M) coïncide avec l'une des valeurs (H) de contrôle mises en mémoire, et
on détermine une valeur (n) de réglage influençant la valeur (H) de contrôle, de manière à ce que la valeur (H) de contrôle satisfasse une condition donnée à l'avance et on achemine la valeur (n) de réglage avec le message (M), dans lequel on n'achemine le message (M) par le point (5) nodal, que si la valeur (H) de contrôle satisfait la condition donnée à l'avance.

2. Procédé suivant la revendication 1,
**caractérisé en ce que**
l'on utilise la condition, que la valeur (H) de contrôle est supérieure ou inférieure ou égale à une valeur (x) de seuil déterminée à l'avance.

3. Procédé suivant la revendication 2,
**caractérisé en ce que**
l'on prescrit la valeur (x) de seuil par un poste central.

4. Procédé suivant la revendication 1 ou 2,
**caractérisé en ce que**
l'on modifie la condition donnée à l'avance, en particulier en fonction d'une charge du réseau (4).

5. Procédé suivant l'une des revendications précédentes,
**caractérisé en ce que**
l'on détermine la valeur (H) de contrôle en tenant compte d'une valeur (a) de prescription donnée à l'avance et non transmise avec le message (M).

6. Procédé suivant l'une des revendications précédentes,
**caractérisé en ce que**
l'on détermine la valeur (H) de contrôle au moyen d'une fonction de contrôle ou de la formation d'une somme de contrôle.

7. Procédé suivant l'une des revendications précédentes,
**caractérisé en ce que**
l'on modifie le procédé en fonction d'une charge du réseau (4).

8. Procédé suivant l'une des revendications précédentes,
**caractérisé en ce que**
l'on annexe la valeur (H) de contrôle au message (M) et/ou on l'achemine avec le message (M).

9. Installation relevant de la sécurité comprenant au moins un récepteur (3) et au moins un réseau (4) relié au récepteur (3) pour la transmission de messages (M) au récepteur (3), dans lequel le réseau (4) a au moins un point (5) nodal de réception et d'acheminement de messages (M) pour le récepteur (3),
**caractérisée en ce que**
l'installation est constituée pour l'utilisation du procédé suivant l'une des revendications précédentes.

10. Installation relevant de la sécurité suivant la revendication 9,
**caractérisée en ce que** l'installation est constituée sous la forme d'une installation (1) de la technique des chemins de fer.
